# EUROPEAN PATENT APPLICATION

(11) **EP 2 947 920 A1**
(43) Date of publication of application: **25.11.2015**
(21) Application number: 14740871.0
(22) Date of filing: 14.01.2014
(51) Int. Cl.: H04W 36/14, H04W 48/18, H04W 88/06

(54) **USER DEVICE, BASE STATION, SWITCHING CONTROL METHOD, AND SCHEDULING CONTROL METHOD**

(30) Priority: 18.01.2013 JP 2013007282
(71) Applicant: NTT DOCOMO, INC., Chiyoda-Ku Tokyo 100-6150 (JP)
(72) Inventor: UCHINO, Tooru, Tokyo 100-6150 (JP); HANAKI, Akihito, Tokyo 100-6150 (JP); TAKAHASHI, Hideaki, Tokyo 100-6150 (JP); HAPSARI, Wuri Andarmawanti, Tokyo 100-6150 (JP)
(74) Representative: Hoffmann Eitle
(86) International application number: PCT/JP2014/050437
(87) International publication number: WO 2014/112466

(57) **Abstract**

A user apparatus for communicating with a base station corresponding to a first radio communication scheme, including first radio communication means that performs communication by the first radio communication scheme; second radio communication means that performs communication by a second radio communication scheme; and switch control means that switches between communication by the first radio communication scheme and communication by the second radio communication scheme, wherein, when the switch control means determines to switch from communication by the first radio communication scheme to communication by the second radio communication scheme, the switch control means transmits a switch notification to the base station.

## Description

### TECHNICAL FIELD

The present invention relates to a radio communication system such as LTE. More particularly, the present invention relates to a user apparatus that is provided with a function for performing switching from communication by a radio communication scheme to communication by another radio communication scheme, and relates to a base station communicating with the user apparatus.

In the specification and the claims, "LTE" is used as a term having a meaning including not only communication schemes corresponding to release 8 or 9 of 3GPP, but also communication schemes corresponding to release 10, 11, 12 or release after that of 3GPP. Also, there is a case where "LTE" is used as a term indicating the whole of the communication system including not only the part of the radio access network but also the core network.

### BACKGROUND ART

DL (Downlink) scheduling in the radio communication system like LTE is performed in the following way. When data arrives at a base station eNB from an upper node (example: S-GW, P-GW), the base station eNB determines a priority of a user apparatus UE of a destination of the data based on a priority of a bearer to which the data belongs, and assigns a DL resource to the user apparatus UE according to the priority. As long as there is DL data for the user apparatus UE, scheduling (DL resource assignment) for the user apparatus is performed.

UL (Uplink) scheduling is performed as follows. The base station eNB receives a BSR (Buffer status report), from the user apparatus UE, indicating an UL data retention amount of the user apparatus UE, and subtracts a received data amount (UL MAC SDU received amount) from the data amount reported by the BSR so as to manage an UL data retention amount of the user apparatus UE. The base station eNB continues to assign UL resources to the user apparatus UE until an estimated UL data retention amount becomes 0 (or until "no data" is reported by BSR).

In recent years, traffic that flows in the communication network (including the radio access network and the core network) such as LTE is growing steadily with the advent of smart phones, and various applications.

On the other hand, when a large amount of U-plane data flows in the communication network, it could become a load in the communication network and could affect communication of important data (example: high QoS data). Here, in general, the current user apparatus UE includes a communication function (to be referred to as radio LAN communication function) for performing communication via a radio LAN access network (example: wifi (registered trademark), hereinafter, there is a case where the radio LAN access network is simply referred to as "radio LAN") in addition to a communication function (to be referred to as LTE communication function) for performing communication via a 3GPP access network such as LTE. So, it is desirable that U-plane data is offloaded by using the radio LAN communication function as much as possible.

### RELATED ART DOCUMENT

### [NON-PATENT DOCUMENT]

Patent Document 1: JP2004-254115

### SUMMARY OF THE INVENTION

### PROBLEM TO BE SOLVED BY THE INVENTION

In a conventional technique, radio LAN and LTE are controlled independently. That is, one side is controlled without consideration of the situation of the other side. Therefore, there is a problem in that it is not possible to cause each user apparatus UE to select a desirable RAT suitable for the current situation. Thus, it is being studied to perform control in cooperation with each other between radio LAN and LTE.

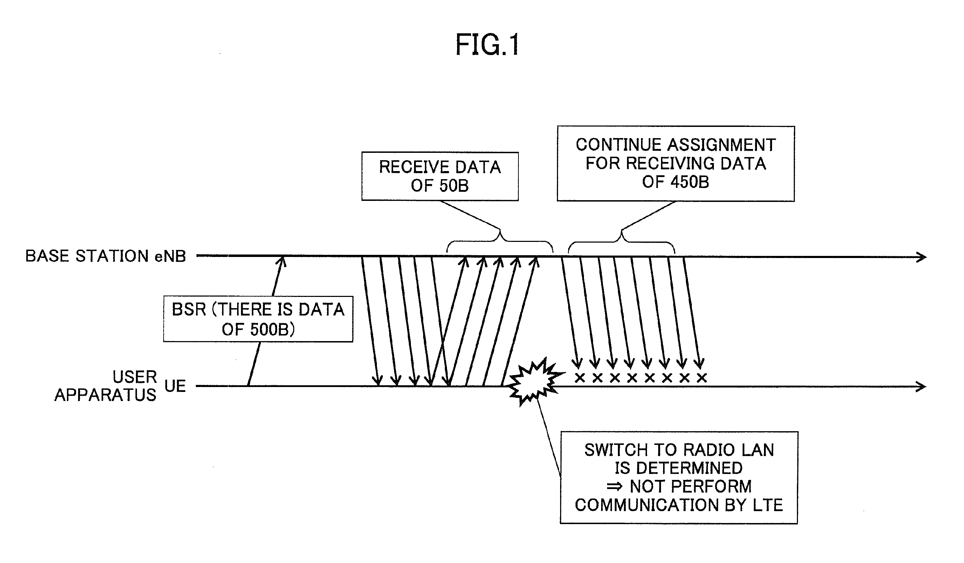

As mentioned above, between radio LAN and LTE, control is performed without consideration of the other's situation. Thus, for example, when the user apparatus UE performs switching from communication using the LTE communication function to communication using the radio LAN communication function, the event that switching has been performed is not reported to the base station eNB. Therefore, the base station eNB continues DL and UL resource assignment for the user apparatus UE as long as there is data. This is not desirable from the viewpoint of resource use efficiency. This problem is describe with reference to Fig. 1.

In the example shown in Fig. 1, the user apparatus UE transmits, to the base station eNB, a BSR (Buffer Status Report) indicating that there is UL data of 500B (byte). The base station eNB performs scheduling, so as to assign an UL resource to the user apparatus UE. The user apparatus UE transmits data to the base station eNB using the assigned resource. In this example, the user apparatus UE transmits data of 50B, and when the base station eNB receives the data of 50B, the user apparatus performs switching to radio LAN to stop data communication by LTE and to start data communication by radio LAN.

However, since the base station eNB does not ascertain that the user apparatus UE has switched to radio LAN, the base station eNB continues to perform an UL resource assignment for the user apparatus UE for receiving the remaining data of 450B. Since the user apparatus has switched to radio LAN so that the user apparatus UE does not perform data communication by LTE, the above-mentioned continuing communication resource assignment becomes useless resource assignment. That is, a radio communication resource that will not be used is assigned, which is not desirable from the viewpoint of resource use efficiency.

The present invention is contrived in view of the above-mentioned points, and an object of the present invention is to provide a technique in which, when a user apparatus including a function for switching between communication by a first radio communication scheme such as LTE and communication by a second radio communication scheme such as radio LAN performs switching to the second radio communication scheme, a radio communication resource of the first radio communication scheme is not wasted.

### MEANS FOR SOLVING THE PROBLEM

For solving the problem, according to an embodiment of the present invention, there is provided a user apparatus for communicating with a base station corresponding to a first radio communication scheme. The user apparatus includes:
first radio communication means that performs communication by the first radio communication scheme;
second radio communication means that performs communication by a second radio communication scheme; and
switch control means that switches between communication by the first radio communication scheme and communication by the second radio communication scheme,
wherein, when the switch control means determines to switch from communication by the first radio communication scheme to communication by the second radio communication scheme, the switch control means transmits a switch notification to the base station.

According to an embodiment of the present invention, there is provided a base station for performing communication with a user apparatus by a first radio communication scheme, the user apparatus including first radio communication means that performs communication by the first radio communication scheme and second radio communication means that performs communication by a second radio communication scheme. The base station includes:
means that receives a switch notification from the user apparatus when the user apparatus determines to switch from communication by the first radio communication scheme to communication by the second radio communication scheme; and
scheduling means that stops scheduling for the user apparatus when receiving the switch notification.

Also, according to an embodiment of the present invention, there is provided a switch control method performed by a user apparatus that includes first radio communication means that performs communication by the first radio communication scheme and second radio communication means that performs communication by a second radio communication scheme, and that communicates with a base station corresponding to the first radio communication scheme. In the switch control method, the user apparatus transmits a switch notification to the base station when determining to switch from communication by the first radio communication scheme to communication by the second radio communication scheme.

Also, according to an embodiment of the present invention, there is provided a scheduling control method performed by a base station for performing communication with a user apparatus by a first radio communication scheme, the user apparatus including first radio communication means that performs communication by the first radio communication scheme and second radio communication means that performs communication by a second radio communication scheme. The scheduling control method includes:
a step of receiving a switch notification from the user apparatus when the user apparatus determines to switch from communication by the first radio communication scheme to communication by the second radio communication scheme; and
a step of stopping scheduling for the user apparatus when receiving the switch notification.

### EFFECT OF THE PRESENT INVENTION

According to the present invention, it becomes possible to provide a technique in which when a user apparatus including a function for switching between communication by a first radio communication scheme such as LTE and communication by a second radio communication scheme such as radio LAN performs switching to the second radio communication scheme, a radio communication resource of the first radio communication scheme is not wasted.

### BRIEF DESCRIPTION OF THE DRAWINGS

Fig. 1 is a diagram for explaining a conventional technique;
Fig. 2 is a block diagram of a communication system in an embodiment of the present invention;
Fig. 3 is a diagram for explaining an operation example in a first embodiment;
Fig. 4 is a diagram showing an example for transmitting a switch notification to a base station eNB via a radio LAN access network;
Fig. 5 is a diagram showing a functional configuration example of a user apparatus UE in the first embodiment;
Fig. 6 is a flowchart showing a basic operation example of the user apparatus UE in the first embodiment;
Fig. 7 is a diagram showing a functional configuration example of a base station eNB in the first embodiment;
Fig. 8 is a flowchart showing a basic operation example of the base station eNB in the first embodiment;
Fig. 9 is a diagram for explaining an operation example in a second embodiment;
Fig. 10 is a diagram showing a functional configuration example of a user apparatus UE in the second embodiment;
Fig. 11 is a flowchart showing a basic operation example of the user apparatus UE in the second embodiment;
Fig. 12 is a diagram showing a functional configuration example of a base station eNB in the second embodiment;
Fig. 13 is a flowchart showing a basic operation example of the base station eNB in the second embodiment;
Fig. 14 is a diagram for explaining an operation example 1 in a third embodiment;
Fig. 15 is a diagram for explaining an operation example 2 in the third embodiment;
Fig. 16 is a diagram for explaining an operation example 3 in the third embodiment;
Fig. 17 is a diagram for explaining an operation example 4 in the third embodiment;
Fig. 18 is a diagram for explaining an operation example 5 in the third embodiment;
Fig. 19 is a diagram showing a functional configuration example of a user apparatus UE in the third embodiment;
Fig. 20 is a flowchart showing a basic operation example of the user apparatus UE in the third embodiment;
Fig. 21 is a diagram showing a functional configuration example of a base station eNB in the third embodiment;
Fig. 22 is a flowchart showing a basic operation example of the base station eNB in the third embodiment.

### EMBODIMENTS FOR CARRYING OUT THE INVENTION

In the following, embodiments of the present invention are described with reference to figures. The embodiments described below are merely examples, and the embodiments to which the present invention is applied are not limited to the embodiments below.

### (Whole system configuration of embodiments)

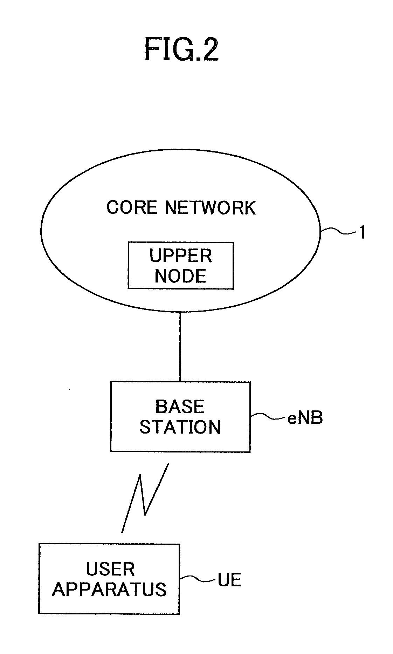

Fig. 2 shows a block diagram of a communication system of an embodiment of the present invention (common to first to third embodiments). The communication system of the present embodiment is a communication system of an LTE scheme, and as shown in Fig. 2, the communication system includes a user apparatus UE, a base station eNB and a core network 1. The core network 1 includes one or more upper nodes for performing data distribution to the base station eNB and performing connection with a packet data network and the like. Also, the core network 1 includes a charging function and the like.

The upper nodes are S-GW and P-GW, for example. An apparatus including S-GW and P-GW together may be provided as the upper node.

### (First embodiment)

In the first embodiment, basically, the user apparatus UE notifies the base station eNB that the user apparatus UE performs switching from communication using the LTE communication function to communication using the radio LAN communication function, and the notified base station eNB stops UL and DL scheduling (UL/DL scheduling) for the user apparatus UE. By the way, there is a case where switching from communication using the LTE communication function to communication using the radio LAN communication function is simply represented as "switching from LTE to radio LAN".

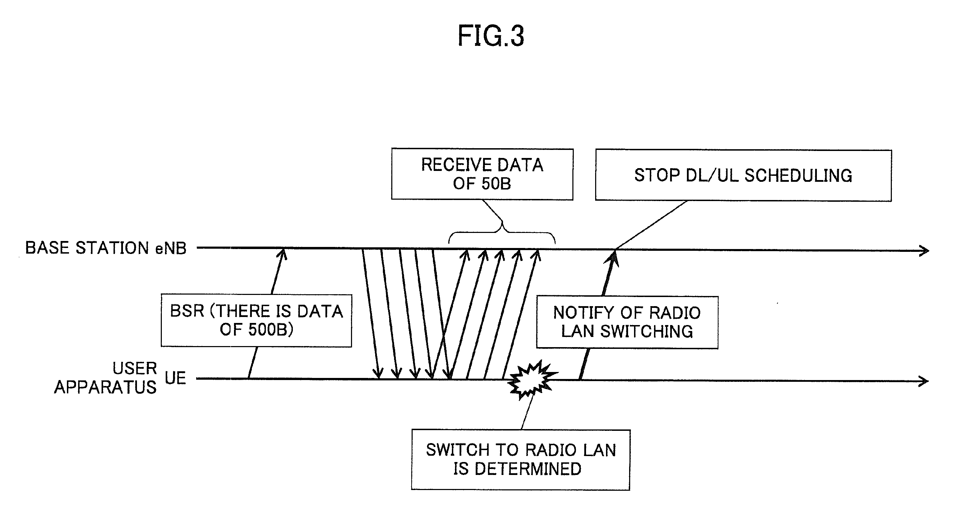

This operation is described with reference to Fig. 3. As shown in Fig. 3, for example, the user apparatus UE notifies the base station eNB by BSR that there is UL data of 500B. Then, after the user apparatus UE transmits data of 50B after being assigned an UL resource from the base station eNB, triggered by determination of switching to radio LAN, the user apparatus UE transmits a switch notification, to the base station eNB, that is information indicating to perform switching to radio LAN. The base station eNB that receives the switch notification stops DL/UL scheduling.

The user apparatus performs switching to radio LAN after transmitting the switch notification to the base station eNB. That is, at the time point when switching to radio LAN is determined, switching to radio LAN has not been performed, so that communication of LTE is continuing. After switching to radio LAN is performed, communication by radio LAN is performed.

It is an example of a trigger for determining switching to radio LAN, for example, that a radio LAN function is turned on due to an operation by a user on the user apparatus UE. In a case where the user apparatus UE is set such that it automatically switches from LTE to radio LAN, it is also an example of a trigger for determining switching to radio LAN that a communication function unit of radio LAN determines that communication by radio LAN is possible by performing measurement of radio wave to detect a sufficient radio field intensity (example: radio field intensity equal to or greater than a predetermined threshold).

Other than the above-mentioned operations, after the user apparatus UE transmits a switch notification to the base station eNB, the base station eNB transmits an acknowledgment (example: ACK in RLC layer) of the switch notification to the user apparatus UE, then, the user apparatus UE may perform switching to radio LAN triggered by reception of the acknowledgment. In this case, for example, the base station eNB stops UL/DL scheduling right after transmitting the acknowledgement.

Also, the base station eNB receives a switch notification, and, after stopping DL/UL scheduling, transmits a switch instruction for switching to radio LAN to the user apparatus UE, then the user apparatus UE may perform switching to radio LAN triggered by reception of the switch instruction. The base station apparatus eNB may stop DL/UL scheduling after transmitting the switch institution for switching to radio LAN to the user apparatus UE.

The layer and the like of signals that carry the above-mentioned switch notification is not limited to a particular one, and any signal may be used. That is, any layer such as RRC layer, MAC layer, physical layer may be used. For example, when the switch notification is performed in a MAC layer, a BSR indicating no data, a BSR indicating Out-of-range and the like may be used as a switch notification.

In the example shown in Fig. 3, the switch notification is sent to the base station eNB before performing switching to radio LAN. Instead of that, after (right after) performing switching to radio LAN, the user apparatus UE may transmits a switch notification (notifying that switching has been performed) to the base station eNB via a radio LAN access network.

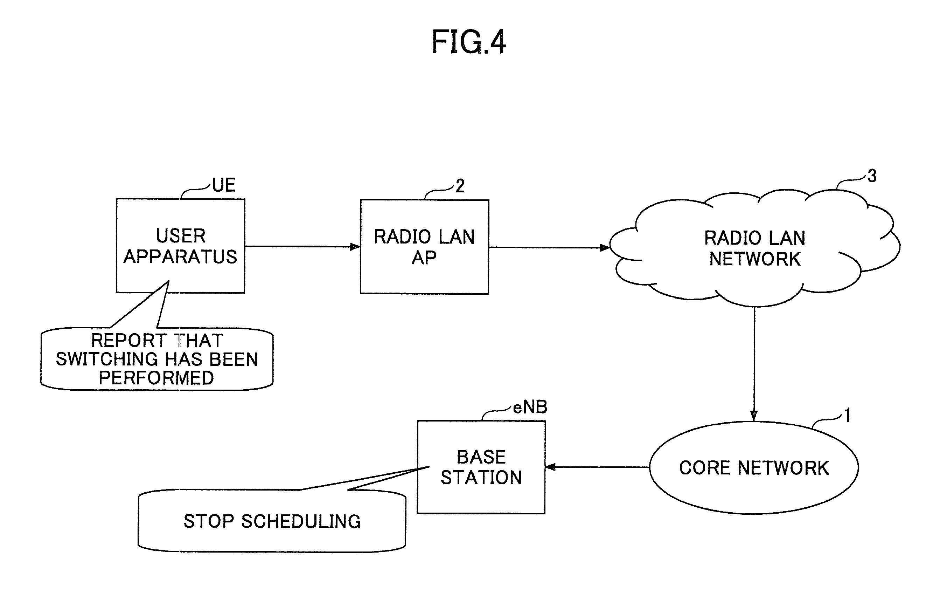

That is, as shown in Fig. 4, the user apparatus UE performs switching to radio LAN, and after starting communication by radio LAN, the user apparatus transmits the switch notification indicating switching has been performed. The switch notification is sent to the base station eNB to which the user apparatus UE belongs via an AP (access point) 2 of radio LAN, a radio LAN network 3, and a core network 1. The base station eNB that receives the switch notification stops UL/DL scheduling for the user apparatus UE.

In a case where the switch notification is transmitted by radio LAN, the switch notification may include an identifier of the base station eNB that becomes the destination, an identifier of the cell, an identifier of the bearer, an identifier of the user apparatus UE and the like. By these identifiers, the switch notification can be sent to a proper base station eNB, and the base station eNB can properly determine which user apparatus UE to stop scheduling for.

In either cases of transmitting the switch notification by LTE and transmitting the switch notification by radio LAN, the user apparatus UE discards buffered data (UL data) for LTE communication after transmitting the switch notification (or, after receiving an acknowledgement for the notification). Alternatively, in the inside of the user apparatus UE, the data may be transferred to a radio LAN function unit so as to transmit the data by radio LAN.

Also, other than performing stop of scheduling, the base station eNB that receives the switch notification may discard buffered data, and may transmit reconstructed UL data to an upper node if possible. Also, the base station eNB may notify an upper node that the user apparatus UE has transferred to radio LAN. The upper node that receives such a notification, for example, performs control not to transfer subsequent DL data for the user apparatus UE to the base station eNB.

### <Apparatus configuration, process flow>

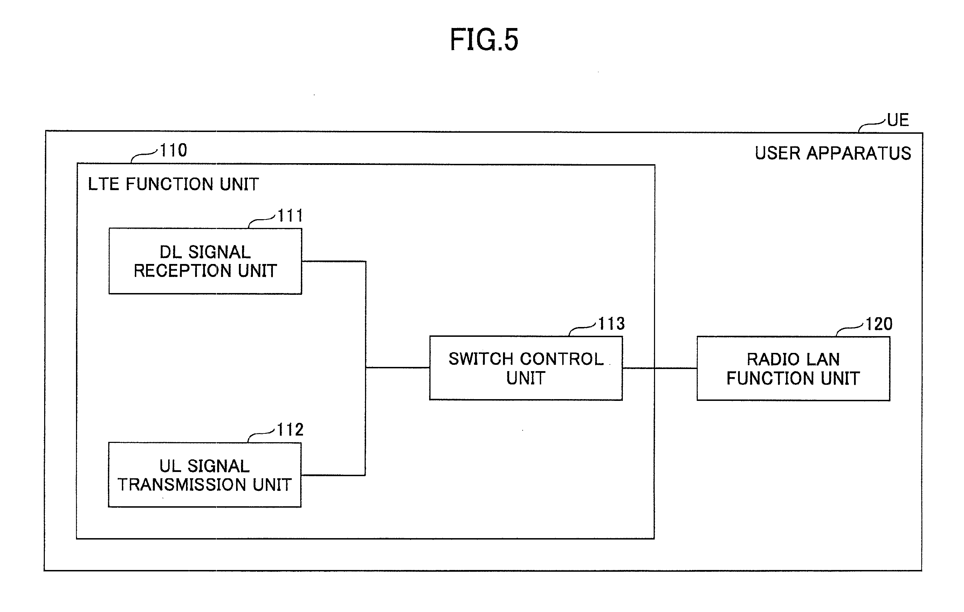

Fig. 5 shows a functional configuration example of the user apparatus UE of the present embodiment. As shown in Fig. 5, the user apparatus UE includes an LTE function unit 110 and a radio LAN function unit 120. Also, the LTE function unit 110 includes a DL signal reception unit 111, an UL signal transmission unit 112, and a switch control unit 113. Fig. 5 shows only functional units particularly related to the present invention in the user apparatus UE, and the user apparatus UE also includes functions not shown in the figure for performing operation complying with the LTE scheme at least.

The LTE function unit 110 is a functional unit configured to perform radio communication by LTE. The radio LAN function unit 120 is a functional unit configured to perform communication by radio LAN.

The DL signal reception unit in the LTE function unit 110 includes a function for receiving various downlink signals from the base station eNB and obtaining information of an upper layer from the received physical layer signal. The UL signal transmission unit 112 includes a function for generating various physical layer signals from upper layer information to be transmitted from the user apparatus UE, and transmitting the signal to the base station eNB.

The switch control unit 113 is a functional unit configure to perform various control on switching including transmission of the before-mentioned switch notification and the like. That is, the switch control unit 113 includes a function for transmitting the switch notification to the base station eNB by LTE or by radio LAN, and a function for performing switching between LTE and radio LAN.

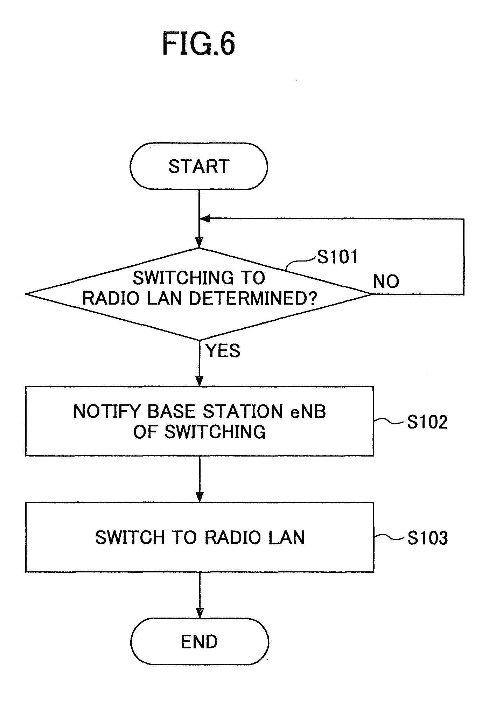

Fig. 6 is a flowchart showing a basic operation example of the user apparatus UE in the first embodiment. Fig. 6 shows a case where switch notification is performed by LTE.

For example, in a state where communication is being performed by LTE, the radio LAN function unit 120 performs measurement of radio wave, and when the radio LAN function unit 120 detects that communication by radio LAN becomes possible, the radio LAN function unit 120 notifies the switch control unit 113 that communication by radio LAN becomes possible. Being triggered by this notification, the switch control unit 113 determines to perform switching from LTE to radio LAN (Yes in step 101). Then, the switch control unit 113 transmits, to the base station eNB, the switch notification via the UL signal transmission unit 112 (step 102), so as to perform switching from LTE to radio LAN such that communication is performed by the radio LAN function unit 120 (step 103).

When performing notification by radio LAN, after switching from LTE to radio LAN is performed by the switch control unit 113, the switch control unit 113 transmits a switch notification to the base station eNB via the radio LAN function unit 120.

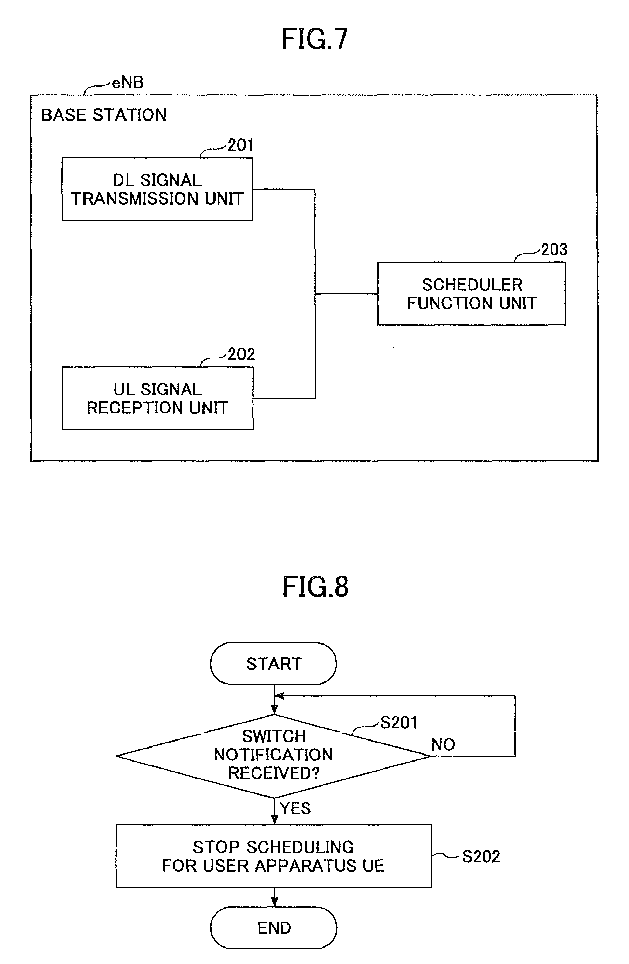

Fig. 7 shows a functional configuration example of the base station eNB in the present embodiment. As shown in Fig. 7, the base station eNB includes a DL signal transmission unit 201, an UL signal reception unit 202, and a scheduler unit 203. Fig. 7 shows only functional units particularly related to the present invention in the base station eNB, and the base station eNB includes functions not shown in the figured for performing operation complying with the LTE scheme at least.

The UL signal reception unit 202 includes a function for receiving various uplink signals from the user apparatus UE, and obtaining upper layer information from the received physical layer signal. The DL signal transmission unit 201 includes a function for generating various signals of physical layer from upper layer information to be transmitted from the base station eNB and transmitting the signal to the user apparatus UE. The scheduler function unit 203 performs scheduling processing for performing resource assignment for the user apparatus UE.

Fig. 8 is a flowchart showing a basic operation example of the base station eNB in the first embodiment.

As shown in Fig. 8, when the scheduler function unit 203 of the base station eNB receives a switch notification from the user apparatus UE via the UL signal reception unit 202 (Yes in step 201), the scheduler function unit 203 stops UL/DL scheduling for the user apparatus UE (step 202). The scheduler function unit 203 may stop scheduling after an acknowledgement signal or a switch instruction is transmitted to the user apparatus UE by the DL signal transmission unit 201.

As mentioned above, according to the first embodiment, the user apparatus UE transmits the switch notification to the base station eNB, so that the base station eNB that has received the switch notification stops scheduling. Thus, useless scheduling can be resolved so as to be able to improve resource use efficiency.

### (Second embodiment)

Next, a second embodiment is described. In the fowling, points different from the first embodiment are mainly described.

When the user apparatus UE is performing data communication by radio LAN, communication in the LTE side is almost not performed. Nevertheless, if communication and operation on control such as reporting of communication quality to the base station eNB are performed frequently in the same way as the case of communication in the LTE side, battery is uselessly consumed.

Thus, in the present embodiment, when the user apparatus UE switches to radio LAN, the base station eNB transmits a control signal to the user apparatus UE, so as to transit a state of the user apparatus UE to a state (power saving state) in which battery saving is available.

As examples of the control signal, there are RRC connection release, a signal (DRX command MAC CE) for forced transition to DRX state, a signal to increase period of DRX cycle, and a signal for deleting UL dedicated resources (suppress battery consumption by CSI/SRS transmission).

Also, in a case where CA (Carrier Aggregation) in which a plurality of cells are used is set, the base station eNB may instruct SCell deactivate (deactivation) or deconfigure (delete) such that communication in SCell (Secondary cell) is not performed. That is, when CA is performed, a PCell (Primary cell) which is a reliable cell for keeping connectivity and an SCell(Secondary cell) which is an ancillary cell are configured for the user apparatus UE. But, since SCell which is an ancillary cell is unnecessary when the user apparatus UE is performing data communication by radio LAN, SCell is deleted.

In order to enable control for the user apparatus UE, in the present embodiment, after the user apparatus UE transmits the switch notification to the base station eNB by LTE, the user apparatus UE continues LTE communication for a predetermined period. Then, during the period, the base station eNB transmits the above-mentioned control signal to the user apparatus UE to transit the user apparatus UE to the state in which battery saving can be performed. The user apparatus of the present embodiment is configured such that, after the user apparatus UE switches to radio LAN communication, even if the user apparatus UE receives the above-mentioned control signal, the user apparatus UE does not perform control operation corresponding to the control signal by discarding the control signal, for example.

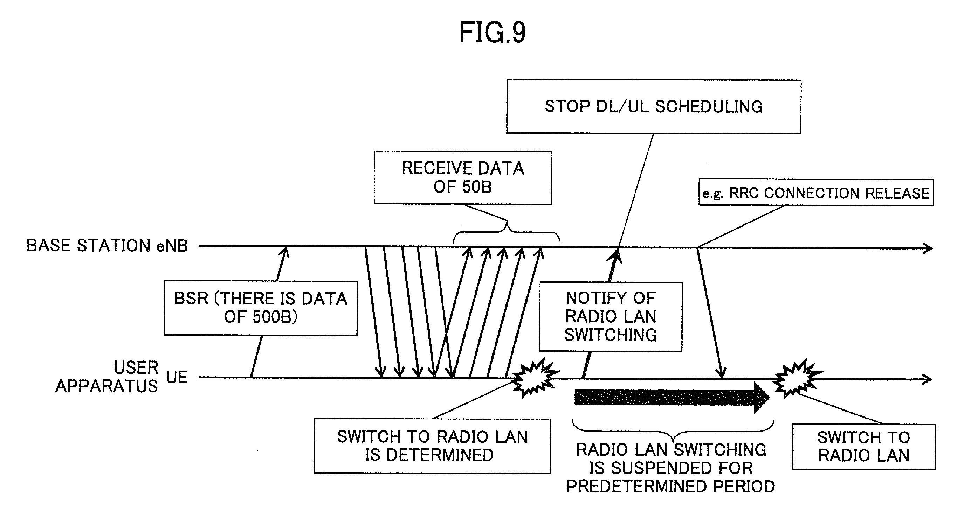

An operation example of the system of the present embodiment is described with reference to Fig. 9. As shown in Fig. 9, for example, the user apparatus UE notifies the base station eNB that there is UL data of 500B by BSR, and after the user apparatus UE is assigned an UL resource from the base station eNB and transmits data of 50B, the user apparatus UE determines to perform switching to radio LAN, and transmits a switch notification to the base station eNB. The base station eNB that receives the switch notification stops DL/UL scheduling.

After transmitting the switch notification to the base station eNB, the user apparatus UE does not perform switching to radio LAN immediately, and continues to perform LTE communication for a predetermined time (predetermined period).

On the other hand, after stopping scheduling by receiving the switch notification, the base station eNB transmits, to the user apparatus UE, a control signal (example: RRC connection release) for causing the user apparatus UE to change the state to a state for suppressing useless operation as mentioned before. This control signal is received by the user apparatus UE within the predetermined period so that the user apparatus UE changes the state according to the control signal. At a time point when the predetermined period elapses after transmitting the switch notification to the base station eNB, the user apparatus UE performs switching to radio LAN.

### <apparatus configuration, process flow>

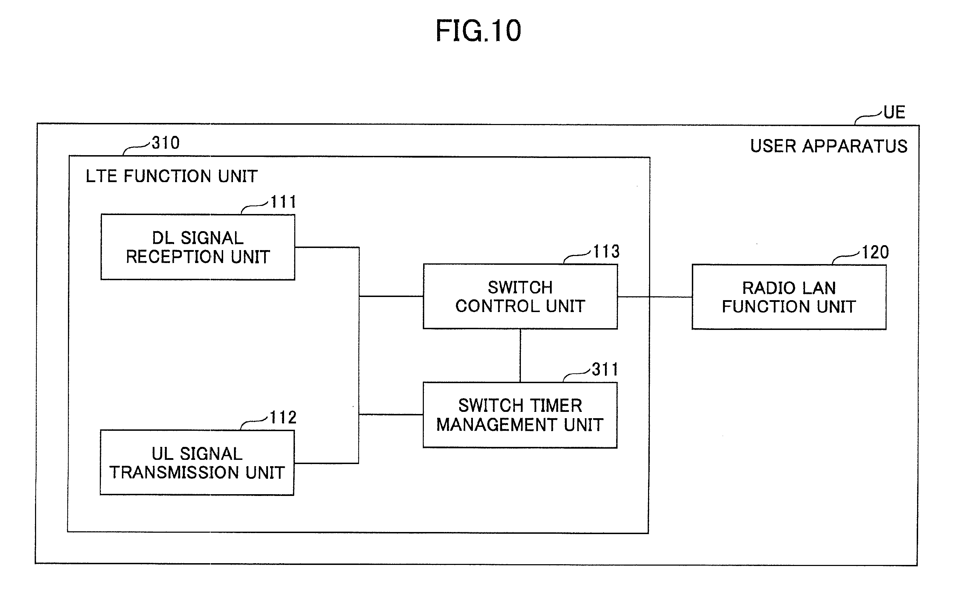

Fig. 10 shows a functional configuration example of the user apparatus UE of the present embodiment. As shown in Fig. 10, the user apparatus UE includes an LTE function unit 310 and a radio LAN function unit 120. The LTE function unit 310 includes a DL signal reception unit 111, an UL signal transmission unit 112, a switch control unit 113, and a switch timer management unit 311. Fig. 10 shows only functional units particularly related to the present invention in the user apparatus UE, and the user apparatus UE includes functions not shown in the figure for performing operation complying with the LTE scheme at least. As shown in Fig. 10, the configuration of the user apparatus UE of this embodiment is different from that of the first embodiment in that the switch timer management unit 311 is provided.

The DL signal reception unit 111 and the UL signal transmission unit 112 have the same functions as those in the first embodiment. The switch control unit 113 of the present embodiment is a functional unit configured to perform control on switch notification including transmission of switch notification of the above-mentioned present embodiment. The switch timer management unit 311 includes a timer for measuring the before-mentioned predetermined period, and has a function for starting measurement of the predetermined period after the switch control unit 113 determines switching to radio LAN, and notifying the switch control unit 113 of elapse of the predetermined period at the time when the predetermined period elapses.

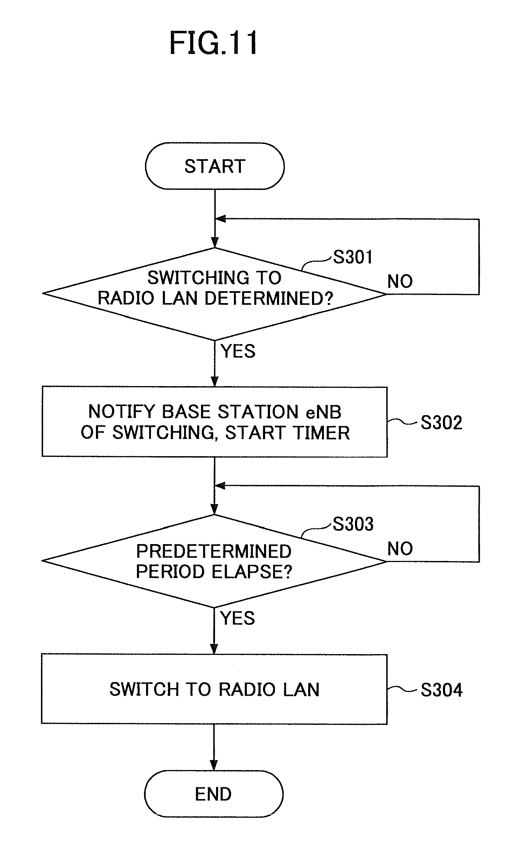

Fig. 11 is a flowchart showing a basic operation example of the user apparatus UE in the second embodiment.

For example, in a state where communication is being performed by LTE, the radio LAN function unit 120 performs measurement of radio wave, and when the radio LAN function unit 120 detects that communication by radio LAN becomes possible, the radio LAN function unit 120 notifies the switch control unit 113 that communication by radio LAN becomes possible. Being triggered by this notification, the switch control unit 113 determines to perform switching from LTE to radio LAN (Yes in step 301). Then, the switch control unit 113 transmits the switch notification to the base station eNB via the UL signal transmission unit 112, and starts the timer in the switch timer management unit 311 (step 302). In a period until the predetermined period elapses, the DL signal reception unit 111 receives a control signal such as the RRC connection release, for example, and performs control according to the control signal. Then, the LTE function unit 310 changes the state of the LTE function unit 310 to the power saving state.

On the other hand, the switch timer management unit 311 checks whether the predetermined period has expired, and when the predetermined period expires (Yes in step 303), the switch timer management unit 311 notifies the switch control unit 113 of elapse of the predetermined period. Being triggered by the notification, the switch control unit 113 performs switching from LTE to radio LAN such that data communication by the radio LAN function unit 120 is performed (step 304)

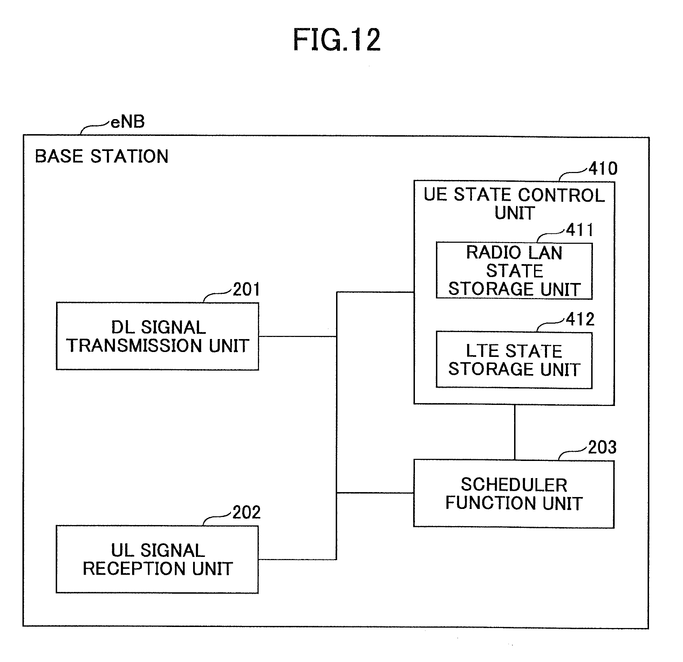

Fig. 12 shows a functional configuration example of the base station eNB in the present embodiment. As shown in Fig. 12, the base station eNB is different from that of the first embodiment in that a UE state control unit 410 is provided. Fig. 12 shows only functional units particularly related to the present invention in the base station eNB, and the base station eNB includes functions not shown in the figure for performing operation complying with the LTE scheme at least.

The UL signal reception unit 202 and the DL signal transmission unit 201 are the same as those of the first embodiment.

The UE state control unit 410 includes a radio LAN state storage unit 411 and an LTE state storage unit 412. The radio LAN state storage unit 411 stores information, for each user apparatus UE, information indicating whether the user apparatus UE has been switched to radio LAN (whether the user apparatus UE is performing communication by radio LAN). The LTE state storage unit 412 stores, for each user apparatus UE, information indicating states in LTE. As for the state in LTE, there are, for example, presence or absence of RRC connection, DRX state, assigned resource, information on CA (identification information for configured cell, and the like), and the like.

For example, based on the switch notification received from the user apparatus UE, the UE state control unit 410 determines whether the user apparatus UE is switched to radio LAN, and updates information in the radio LAN state storage unit 411. Also, for example, the UE state control unit 410 receives information from the DL signal transmission unit 201 and UL signal reception unit 202 and the like, and ascertains LTE state of each user apparatus UE so as to update information in the LTE state storage unit 412.

Also, when the UE state control unit 410 of the present embodiment receives the switch notification from the user apparatus UE via the UL signal reception unit 202, the UE state control unit 410 causes the scheduler function unit 203 to stop scheduling for the user apparatus UE, and performs control for transmitting the control signal such as the before-mentioned RRC connection release to the user apparatus UE.

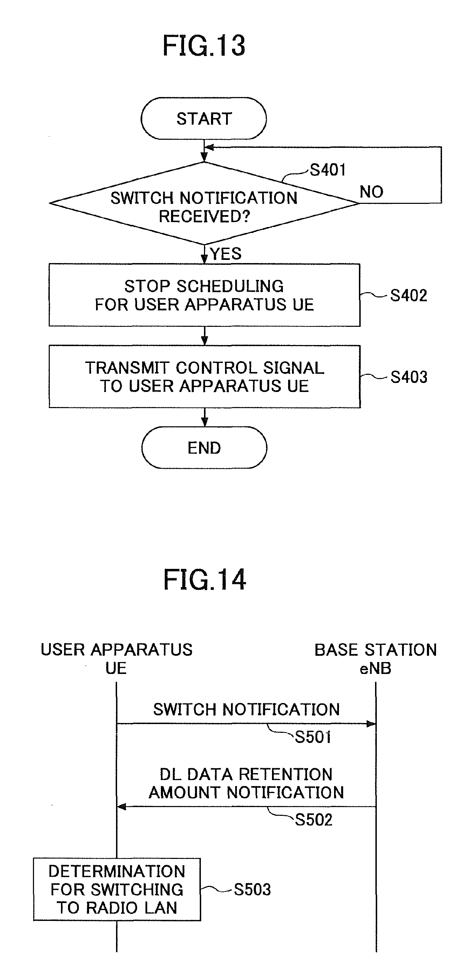

Fig. 13 is a flowchart showing a basic operation example of the base station eNB in the second embodiment.

As shown in Fig. 13, when the UE state control unit 410 of the base station eNB receives the switch notification from the user apparatus UE via the UL signal reception unit 202 (Yes in step 401), the UE state control unit 410 causes the scheduler function unit 203 to stop scheduling for the user apparatus UE (step 402). Accordingly, the scheduler function unit 203 stops scheduling for the user apparatus UE. Further, the UL state control unit 410 transmits the control signal such as the RRC connection release to the user apparatus UE (step 403). Accordingly, the state of the user apparatus UE is changed to the state of battery saving.

As mentioned above, according to the second embodiment, the user apparatus UE transmits a switch notification to the base station eNB, and the base station eNB that receives the switch notification stops scheduling. Thus, useless scheduling can be resolved so that resource use efficiency can be improved. Further, since the state of the user apparatus UE is changed to the battery saving state, battery consumption amount can be decreased in the user apparatus UE that has switched to radio LAN.

### (Third embodiment)

Next, the third embodiment is described. In the communication system of the embodiment of the present invention, charging for data is performed in the core network 1. Therefore, it is not desirable, from the viewpoint of the charging, to discard DL data that arrives via the core network and remains in the base station eNB. Thus, in the present embodiment, switching to radio LAN is performed in consideration of the amount of DL data remaining in the base station eNB. The present embodiment is common to the second embodiment in that, after the user apparatus UE transmits the switch notification to the base station eNB, the user apparatus UE does not perform switching to radio LAN immediately.

As mentioned above, basically, in the present embodiment, switching to radio LAN is determined based on the retention amount of DL data in the base station eNB.

That is, as shown in Fig. 14, when the user apparatus UE determines to perform switching to radio LAN and transmits a switch notification to the base station UE (step 501), the base station eNB notifies the user apparatus UE of a retention amount of DL data of the user apparatus UE (step 502). The user apparatus UE determines whether to perform switching to radio LAN based on the retention amount of DL data (step 503).

In step 503 the user apparatus UE compares the retention amount of DL data sent from the base station eNB with a predetermined threshold. If the retention amount is equal to or less than the threshold, the user apparatus UE performs switching to radio LAN. The signal for the notification of the retention amount is not limited to a particular signal. For example, the notification may be performed by using a PDCP status report in the PDCP layer. Also, a MAC layer signal similar to the BSR transmitted from the user apparatus UE to the base station eNB in the MAC layer may be transmitted as a retention amount notification from the base station eNB to the user apparatus UE.

The base station eNB may transmit the threshold for each user apparatus UE. Also, as described later, the threshold may be determined dynamically.

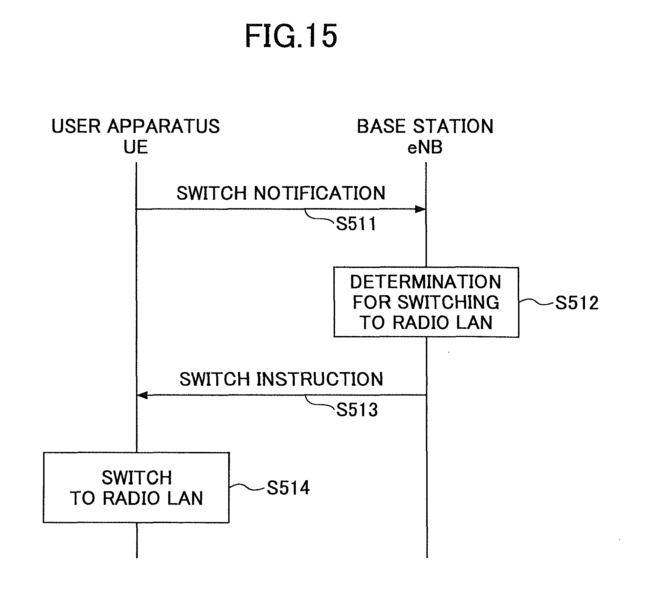

Also, the base station eNB may determine switching to radio LAN of the user apparatus UE. That is, as shown in Fig. 15, the user apparatus UE transmits a switch notification to the base station eNB (step 511), then, the base station eNB that receives the switch notification compares a DL data retention amount of the user apparatus UE with a predetermined threshold so as to determine whether to cause the user apparatus UE to perform switching to radio LAN (step 512). A determination method here is the same as a determination method of switching to radio LAN in the user apparatus UE. Then, when the base station eNB determines to cause the user apparatus UE to perform switching to radio LAN, the base station eNB transmits a switch instruction for instructing switching to radio LAN to the user apparatus UE (step 513). The user apparatus UE that receives the switch instruction signal performs switching to radio LAN (step 514).

In the above-mentioned method described with reference to Figs. 14 and 15, it is determined whether to perform switching to radio LAN in the user apparatus UE by considering only the retention amount of DL data in the base station eNB. Further, data arriving from an upper node (example: S-GW) may be additionally considered.

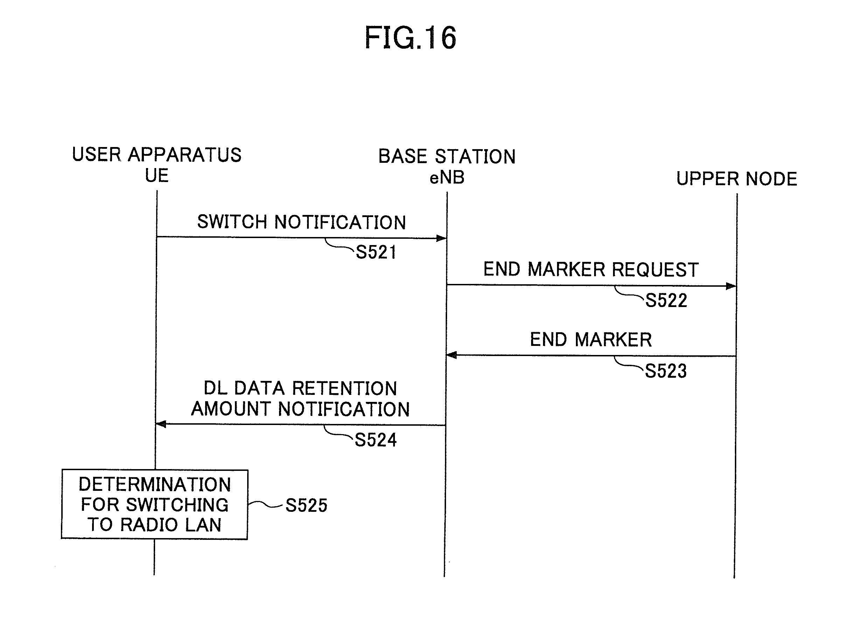

That is, as shown in Fig. 16, when the user apparatus UE determines to switch to radio LAN, and transmits a switch notification to the base station UE (step 521), the base station eNB transmits, to the upper node, an end marker request for DL data of the user apparatus UE (step 522). In the upper node that receives the end marker request, when DL data transfer for the user apparatus UE completes, the upper node transmits, to the base station eNB, a packet to which information called "end marker" indicating that data transfer ends is added (for convenience sake, the packet is to be referred to as "end marker") (step 523). The base station eNB transmits, to the user apparatus UE, a DL data retention amount of the user apparatus UE at the time point when the base station eNB receives the end marker (step 524). The user apparatus UE determines whether to perform switching to radio LAN based on the retention amount of DL data (step 525).

The determination process is the same as that in the case described with reference to Fig. 14. The user apparatus UE compares the DL data retention amount received from the base station eNB with the predetermined threshold, and if the retention amount is equal to or less than the threshold, switching to radio LAN is performed.

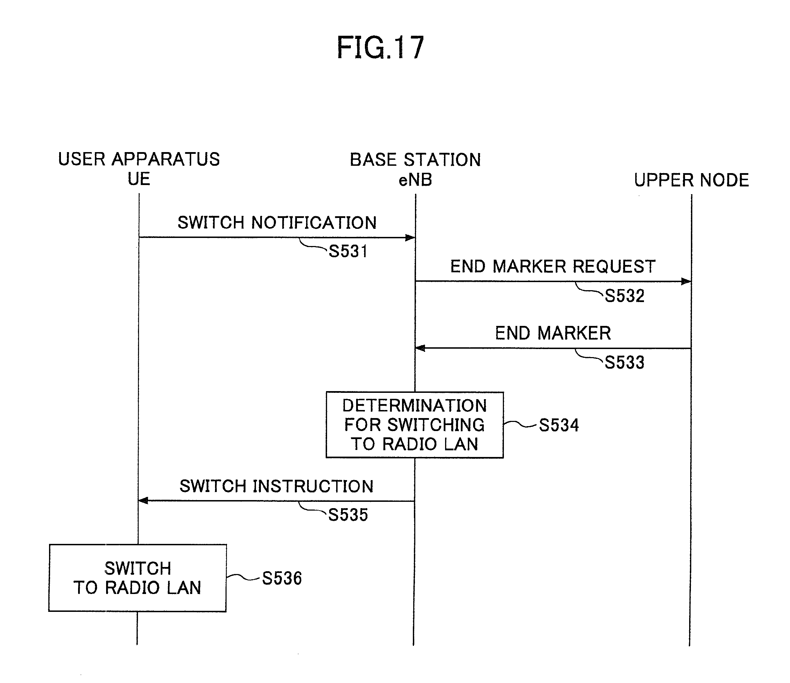

Also, in this case, like the case shown in Fig. 15, the base station eNB may determine switching to radio LAN for the user apparatus UE. This process is shown in Fig. 17. In Fig. 17, processes of steps 531-533 are the same as those of steps 521-523 in Fig. 16. In step 534, the base station eNB that has received the end marker compares the DL data retention amount of the user apparatus UE at the time when receiving the end marker with the threshold so as to determine whether to cause the user apparatus UE to perform switching to radio LAN. The determination method here is the same as the determination method of switching to radio LAN in the user apparatus UE. Then, when the base station eNB determines to cause the user apparatus UE to perform switching to radio LAN, the base station eNB transmits a switch instruction signal for instructing switching to radio LAN to the user apparatus UE (step 533). The user apparatus UE that receives the switch instruction signal performs switching to radio LAN (step 536).

In the above-mentioned example, the upper node that has transmitted the end marker may stop transmission of U-plane data for the user apparatus UE (stop transmission before being charged).

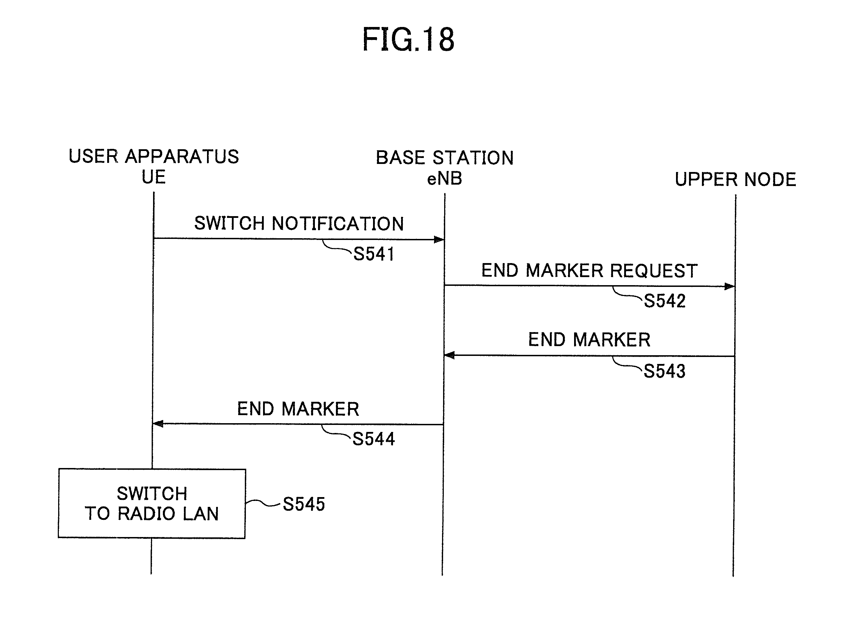

Also, processes shown in Fig. 18 can be performed. In the following, points different from Fig. 17 are described.

In Fig. 18, the base station eNB that receives the end marker transmits the end marker to the user apparatus UE transparently (step S544). Triggered by the reception of the end marker, the user apparatus UE performs switching to radio LAN. That is, in the example shown in Fig. 18, the user apparatus UE does not perform determination based on the DL data retention amount. Instead, the user apparatus UE determines completion of DL data reception by receiving the end marker so as to perform switching to radio LAN. By the way, considering a case where the user apparatus UE cannot receive the end marker due to radio status and the like, if the user apparatus UE does not receive the end marker at a time when a predetermined period elapses after transmitting the switch notification, switching to radio LAN is performed by a function of the switch timer management unit.

In the embodiment in which determination of switching to radio LAN is performed based on the DL data retention amount, the determination may be performed for each bearer, for each LCP, for each UE, or for each QoS. As to parameters like bearer, LCP, and QoS for which there a plurality of kinds for one user apparatus UE, for example, a threshold may be set for each kind, and switching may be performed when the amount for every kind is equal to or less than the threshold. That is, for example, when there are QoS1 and QoS2, a threshold 1 is set for QoS1 and a threshold 2 is set for QoS2, and switching is performed when the amount for every QoS becomes equal to or less than the corresponding threshold. Other than the above-mentioned example, switching may be performed when only a particular kind of the plurality of kinds is equal to or less than the threshold. That is, for example, when there are QoS1 and QoS2, retention amount determination is performed only for QoS1, and switching is performed when the amount for QoS1 becomes equal to or less than the threshold.

In the embodiment in which determination of switching to radio LAN is performed based on the DL data retention amount, switching is not performed when the DL data retention amount is not equal to or less than the threshold. After that, for example, the base station eNB notifies the user apparatus UE of the DL data retention amount at a predetermined time interval (example: notify until the DL data retention amount becomes 0), then, the user apparatus UE may perform switching at a time point when the DL data retention amount becomes equal to or less than the threshold. Also, when the user apparatus UE determines that the DL data retention amount is not equal to or less than the threshold, the user apparatus UE may perform switching after a predetermine time elapses according to the DL data retention amount.

In the case where the base station eNB side performes switch determination, like the above-mentioned example, when it is determined that the DL data retention amount is not equal to or less than the threshold first, after that, the base station eNB checks the DL data retention amount at a predetermined time interval, then, the base station eNB may perform switch instruction at a time point when the DL data retention amount becomes equal to or less than the threshold. Also, when the base station eNB determines that the DL data retention amount is not equal to or less than the threshold, the base station eNB may perform switch instruction after a predetermine time elapses according to the DL data retention amount.

Also in the third embodiment, in the same way as the second embodiment, a control signal, such as the RRC connection release, may be transmitted from the base station eNB that has received the switch notification to the user apparatus UE for changing a state of the user apparatus UE to a battery saving state.

Also in the third embodiment, in the same way as the first and the second embodiments, after receiving the switch notification, UL/DL scheduling may be stopped. More specifically, for example, after receiving the switch notification, the base station eNB compares the DL data retention amount with a threshold (the same as the above-mentioned threshold for switch determination), so that the base station eNB stops UL/DL scheduling at a time point, which is a switching timing, when the DL data retention amount becomes equal to or less than the threshold. Also, in the example using the end marker, for example, at the time point when receiving the end marker or when a predetermined time elapses after receiving the end marker, the base station eNB stops UL/DL scheduling.

### <About policy of threshold determination>

In the present embodiment, as to determination by comparing the DL data retention amount and the threshold, following policies can be set, for example. For example, the base station eNB determines and notifies a threshold for each user apparatus UE, and performs determination by using a threshold determined by the base station eNB. Following policies are merely examples.

### (1) Policy on application

For example, as for an application that requires real-time processing in radio LAN (an application for which delay requirement is strict), it is desirable to switch to radio LAN by discarding data even when data remains in the LTE side to some extent. Therefore, in this case, the threshold is set to be large.

Also, in a case where radio LAN switching is performed by user's operation on a radio LAN connecting application, the radio LAN switching may be performed early. Also, in this case, the threshold is set to be large.

### (2) Policy on charging

In the LTE system, there are a bearer of measured rate charging and a bearer of fixed rate charging. For example, as for a bearer of measured rate charging, since it is better to receive data even though the amount is small, the threshold is set to be small. On the other hand, as for a bearer of fixed rate charging, since it is not necessary to worry about charging, it is possible to switch to radio LAN early by setting the threshold to be large.

### (3)Policy on battery

As for a user apparatus UE of very low battery saving ability in LTE communication (that is, consuming large amount of battery), it may be switched to radio LAN early irrespective of the retention amount. That is, the threshold is set to be large.

### (4)Policy on environment of user apparatus UE

In a case where the user apparatus UE can ascertain traffic status in radio LAN, when the user apparatus UE detects traffic congestion in radio LAN, it is considered that the user apparatus UE continues to perform communication in the LTE side as much as possible, then, the user apparatus UE switches to radio LAN. In such a case, the threshold is set to be small.

Also, in a case where the radio link in the LTE side is not very good, there is a possibility that higher throughput can be obtained by immediately switching to radio LAN instead of remaining in LTE. Thus, in this case, the threshold is set to be large.

As mentioned above, the threshold may be dynamically changed according to the state of the user apparatus UE (or according to the surrounding environment). This change may be performed by the user apparatus UE, or the base station eNB may perform this change, and notify the user apparatus UE of the change. In an embodiment in which the base station eNB performs the change, for example, the user apparatus UE notifies the base station eNB of the state of the user apparatus UE and surrounding radio environment and the like so that the base station eNB determines the threshold based on the notified information.

### <Apparatus configuration, process flow>

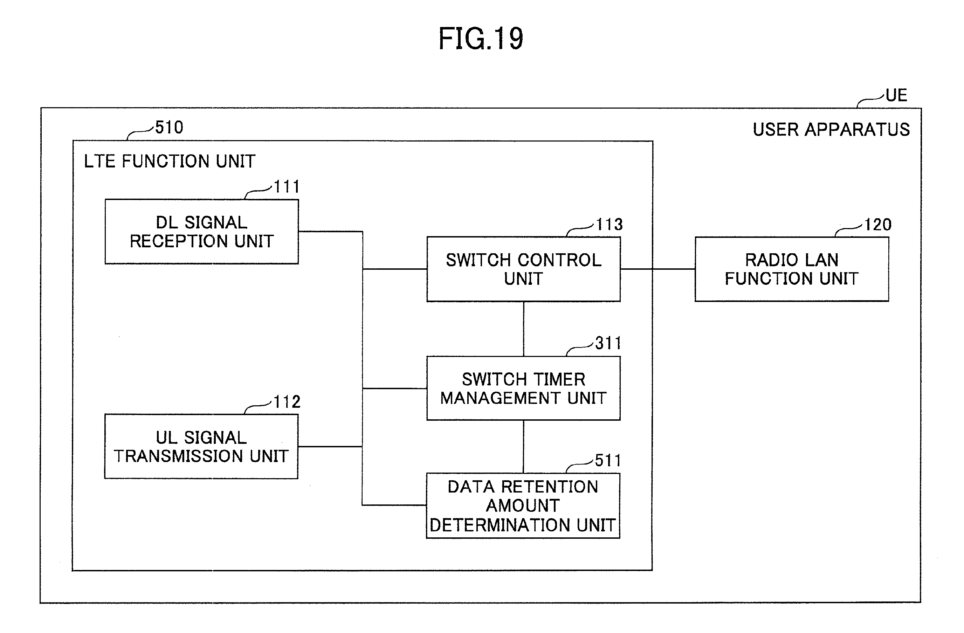

Fig. 19 shows a functional configuration example of the user apparatus UE of the present embodiment. As shown in Fig. 19, the user apparatus UE includes an LTE function unit 510 and a radio LAN function unit 120. Also, the LTE function unit 510 includes a DL signal reception unit 111, an UL signal transmission unit 112, a switch control unit 113, a switch timer management unit 311 and a data retention amount determination unit 511. Fig. 19 shows only functional units particularly related to the present invention in the user apparatus UE, and the user apparatus UE includes functions not shown in the figure for performing operation complying with the LTE scheme at least. As shown in Fig. 19, the configuration of the user apparatus UE of the present embodiment is different from that in the first embodiment in that the switch timer management unit 311 and the data retention amount determination unit 511 are provided. Also, the configuration of the user apparatus UE of the present embodiment is different from that in the second embodiment in that the data retention amount determination unit 511 is provided. A configuration may be adopted in which the switch timer management unit 311 and the data retention amount determination unit 511 are provided within the switch control unit 113.

The DL signal reception unit 111 and the UL signal transmission unit 112 have functions similar to those in the first and the second embodiments. The switch control unit 113 of the present embodiment is a functional unit configured to perform various control on switching including transmission of the switch notification and the like in the present embodiment. The switch timer management unit 311 includes a timer for measuring the before-mentioned predetermined period, and has a function for notifying the switch control unknit 113 of elapse of the predetermined period after the switch control unit 113 determines switching to radio LAN, and transmits the switch notification. The data retention amount determination unit 511 includes functions for comparing a DL data retention amount received from the base station eNB with a threshold, determining whether the DL data retention amount is equal to or less than the threshold, and, if the DL data retention amount is equal to or less than the threshold, notifying the switch control unit 113 of it.

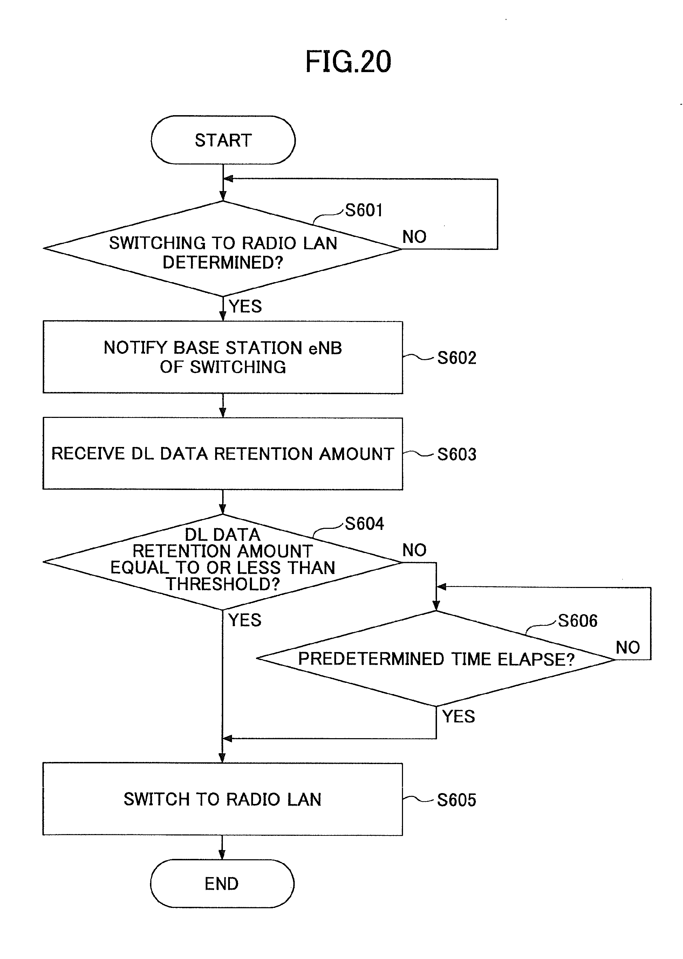

Fig. 20 is a flowchart showing a basic operation example of the user apparatus UE in the third embodiment.

First, based on a trigger as mentioned before, the switch control unit 113 determines to perform switching from LTE to radio LAN (Yes in step 601). Then, the switch control unit 113 transmits a switch notification to the base station eNB via the UL signal transmission unit 112 (step 602). After that, the user apparatus UE receives a DL data retention amount from the base station eNB (step 603).

Then, the data retention amount determination unit 511 compares the DL data retention amount received from the base station eNB with the threshold, and if the DL data retention amount is equal to or less than the threshold (Yes in step 604), the data retention amount determination unit 511 notifies the switch control unit 113 of it, so that the switch control unit 113 performs switching to radio LAN (step 605). In the example of this process flow, when the DL data retention amount is not equal to or less than the threshold (No in step 604), the switch timer management unit 311 measures a predetermined time from this time point, so that switching is performed at a time point when the predetermined time elapses (Yes in step 606, step 605). As mentioned before, in the case where the DL data retention amount is not equal to or less than the threshold, the user apparatus UE may receive the DL data retention amount at a predetermined time interval, and perform switching at the time point when the DL data retention amount becomes equal to or less than the threshold.

In an example using the end marker, the user apparatus UE performs switching at the time when the switch control unit 113 receives the end marker. Also, in the example where the end marker is used, the user apparatus UE performs switching at the time when a predetermined time elapses without receiving the end marker after the switch control unit 113 transmits the switch notification.

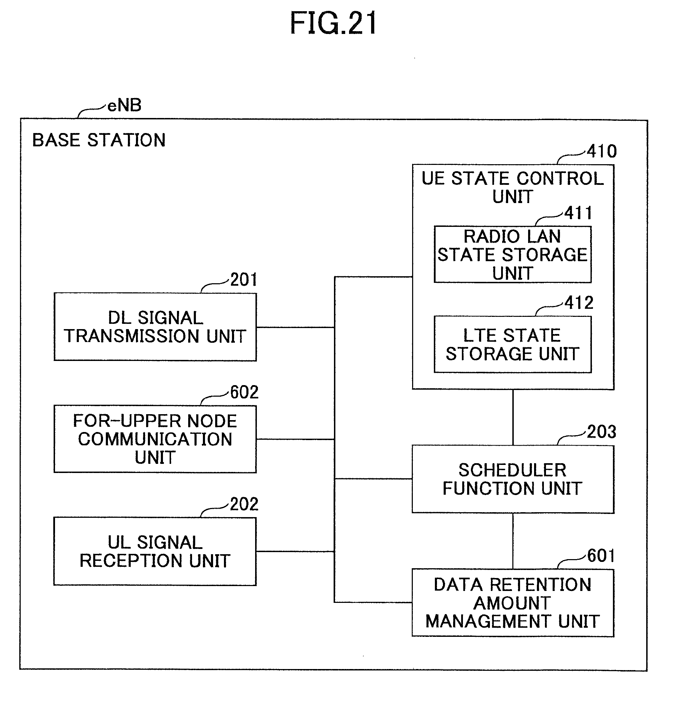

Fig. 21 shows a functional configuration example of the base station eNB of the present embodiment. As shown in Fig. 21, the base station of the present embodiment is different from that of the first embodiment in that a UE state control unit 410, a data retention amount management unit 601, and a for-upper node communication unit 602 are shown. Also, the base station eNB of the present embodiment is different from that of the second embodiment in that the data retention amount management unit 601, and the for-upper node communication unit 602 are shown. Fig. 21 shows only functional units particularly related to the present invention in the base station eNB, and the base station eNB includes functions not shown in the figure for performing operation complying with the LTE scheme at least.

The UL signal reception unit 202 and the DL signal transmission unit 201 are similar to those in the first and the second embodiments. The UE state control unit 410 stores information similar to that of the second embodiment, and includes the radio LAN state storage unit 411 and the LTE state storage unit 412 for which update is performing in the same way.

Also, when the UE state control unit 410 of the present embodiment receives the switch notification from the user apparatus UE via the UL signal reception unit 202, the UE state control unit 410 instructs the scheduler function unit 203 to stop scheduling for the user apparatus UE, and performs control for transmitting the before-mentioned control signal such as the RRC connection release to the user apparatus UE. The timing for stopping the scheduling is, for example, as mentioned before, the time when the DL data retention amount becomes equal to or less than the threshold, or the time when receiving the end marker. Also, transmission of the control signal such as the RRC connection release is performed when the user apparatus UE continues to perform LTE communication, such as, before the DL data retention amount becomes equal to or less than the threshold, or before receiving the end marker.

The data retention amount management unit 601 includes a storage unit for storing, for each user apparatus UE, a retention amount of DL data for the user apparatus UE, and a function for notifying the user apparatus UE of the DL data retention amount of the user apparatus UE when being notified, by the UE state control unit 410, of reception of the switch notification from the user apparatus UE. Also, the data retention amount management unit 601 includes a function for comparing the DL data retention amount with the threshold, and transmitting the switch instruction to the user apparatus UE when the DL data retention amount is equal to or less than the threshold.

As for the case in which the end marker is used, the for-upper node communication unit 602 includes a function for transmitting an end marker request to the upper node, receiving an end marker from the upper node, and notifying the data retention amount management unit 601 of the reception of the end marker. In this case, being triggered by the reception of the end marker, the data retention amount management unit 601 performs DL data retention amount notification to the user apparatus UE, or DL data retention amount determination and switch instruction.

Also, in the case where the end marker is transmitted to the user apparatus UE, the DL signal transmission unit 201 transfers, to the user apparatus UE, the end marker received by the for-upper node communication unit 602.

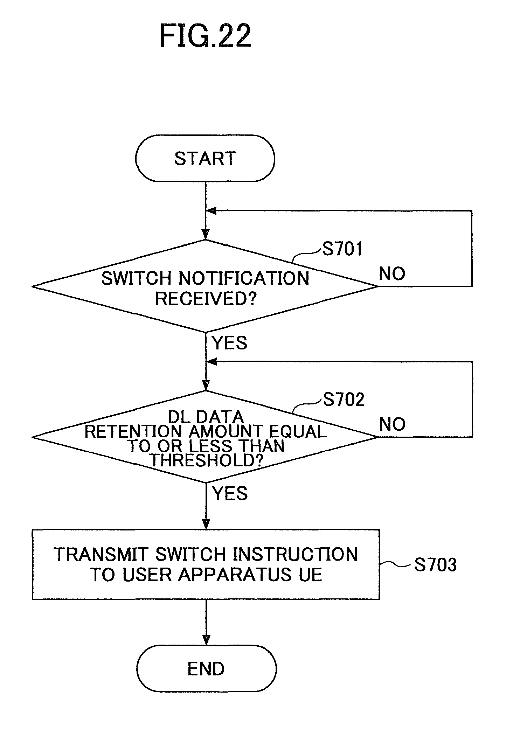

Fig. 22 is a flowchart showing a basic operation example of the base station eNB in the third embodiment (example in which the base station eNB performs data retention amount threshold determination).

As shown in Fig. 22, when receiving the switch notification from the user apparatus UE via the UL signal reception unit 202 (Yes in step 701), the UE state control unit 410 of the base station eNB notifies the data retention amount management unit 601 of the reception of the switch notification. The data retention amount management unit 601 compares the retention amount of DL data stored in a buffer for the user apparatus UE with a predetermined threshold, and determines whether the retention amount is equal to or less than the threshold (step 702). When the retention amount is equal to or less than the threshold, switch instruction is performed for the user apparatus UE (step 703). When the retention amount is not equal to or less than the threshold, in this example, the data retention amount management unit 601 compares the retention amount and the threshold at a predetermined time interval, and performs switch instruction for the user apparatus UE at a time point when the retention amount becomes less than the threshold.

As mentioned above, according to the third embodiment, since switching to radio LAN is performed when the DL data retention amount becomes equal to or less than the threshold, it becomes possible to eliminate a case where all of residing DL data is discarded, so that, for example, desirable operation from the viewpoint of charging can be realized. Aldo, since it becomes possible to perform control for receiving the residing DL data in LTE as much as possible, useless scheduling can be resolved, so that resource use efficiency can be improved. Also, in a case where the end marker is used, since it becomes possible to perform switching after confirming the end of DL data reception, it becomes possible to realize desirable operation from the viewpoint of charging like the above-mentioned example.

Also in the present embodiment, the base station eNB that has received the switch notification stops DL scheduling so that resource use efficiency can be improved. Further, by transmitting a control signal for causing the user apparatus UE to change to a state of battery saving, battery consumption amount can be decreased in the user apparatus UE that has switched to radio LAN.

Although switching between LTE and radio LAN has been described so far, the radio communication scheme that becomes a switching target is not limited to these. LTE and radio LAN are merely examples. For example, the present invention can be applied to switching between 3G and radio LAN.

In the above, each embodiment of the present invention has been explained. However, the disclosed invention is not limited to the embodiments, and those skilled in the art will conceive of various modified examples, corrected examples, alternative examples, substituted examples, and the like. While specific numerical value examples are used to facilitate understanding of the present invention, such numerical values are merely examples, and any appropriate value may be used unless specified otherwise. Classification into each item in the description is not essential in the present invention, and features described in two or more items may be combined and used as necessary. Subject matter described in an item may be applied to subject matter described in another item (provided that they do not contradict).

It is not always true that the boundaries of the functional units or the processing units in the functional block diagram correspond to boundaries of physical components. The operations by the plural functional units may be physically performed by a single component. Alternatively, the operations by the single functional unit may be physically performed by plural components.

For convenience of explanation, the user apparatus UE and the base station eNB have been explained by using functional block diagrams. However, the apparatuses may be implemented in hardware, software, or a combination thereof. The software that operates by a processor included in the apparatus (user apparatus UE, base station eNB) according to the present invention may be stored in any proper storage medium such as a RAM (Random Access Memory), a flash memory, a ROM (Read Only Memory), an EPROM, an EEPROM, a register, a hard disk (HDD), a removable disk, a CD-ROM, a database, a server and the like.

The present invention is not limited to the above-mentioned embodiments and is intended to include various variations, modifications, alterations, substitutions and so on without departing from the spirit of the present invention.

The present international application claims priority based on Japanese patent application No. 2013-007282, filed in the JPO on January 18, 2013, and the entire contents of the Japanese patent application No. 2013-007282 are incorporated herein by reference.

### DESCRIPTION OF REFERENCE SIGNS

- 1: core network
- UE: user apparatus
- eNB: base station
- 2: radio LAN AP
- 3: radio LAN network
- 110, 310, 510 LTE: function unit
- 120: radio LAN function unit
- 111: DL signal reception unit
- 112: UL signal transmission unit
- 113: switch control unit
- 201: DL signal transmission unit
- 202: UL signal reception unit
- 203: scheduler function unit
- 311: switch timer management unit
- 410: UE state control unit
- 411: radio LAN state storage unit
- 412: LTE state storage unit
- 511: data retention amount determination unit
- 601: data retention amount management unit
- 602: for-upper node communication unit

## Claims

1. A user apparatus for communicating with a base station corresponding to a first radio communication scheme, comprising:
first radio communication means that performs communication by the first radio communication scheme;
second radio communication means that performs communication by a second radio communication scheme; and
switch control means that switches between communication by the first radio communication scheme and communication by the second radio communication scheme,
wherein, when the switch control means determines to switch from communication by the first radio communication scheme to communication by the second radio communication scheme, the switch control means transmits a switch notification to the base station.

2. The user apparatus as claimed in claim 1, wherein, when the switch control means determines to switch from communication by the first radio communication scheme to communication by the second radio communication scheme, the switch control means transmits the switch notification indicating to perform switching to the base station by the first radio communication scheme.

3. The user apparatus as claimed in claim 1 or 2, wherein, after the switch control means transmits the switch notification to the base station, the switch control means continues to perform communication by the first radio communication scheme without performing switching until a predetermined period elapses, and at a time when the predetermined period elapses, the switch control means performs switching.

4. The user apparatus as claimed in claim 1 or 2, wherein, after the switch control means transmits the switch notification to the base station, the switch control means continues to perform communication by the first radio communication scheme without performing switching until receiving an end marker from the base station, and at a time when receiving the end marker, the switch control means performs switching.

5. The user apparatus as claimed in claim 1, wherein, after the switch control means determines to switch from communication by the first radio communication scheme to communication by the second radio communication scheme and performs switching, the switch control means transmits the switch notification indicating switching has been performed to the base station by the second radio communication scheme.

6. A base station for performing communication with a user apparatus by a first radio communication scheme, the user apparatus including first radio communication means that performs communication by the first radio communication scheme and second radio communication means that performs communication by a second radio communication scheme, the base station comprising:
means that receives a switch notification from the user apparatus when the user apparatus determines to switch from communication by the first radio communication scheme to communication by the second radio communication scheme; and
scheduling means that stops scheduling for the user apparatus when receiving the switch notification.

7. The base station as claimed in claim 6, comprising
means that transmits a control signal to the user apparatus for causing the user apparatus to transit to a power saving state when receiving the switch notification from the user apparatus.

8. The base station as claimed in claim 6 or 7, comprising
means that transmits an end marker request to an upper node when receiving the switch notification from the user apparatus, receives an end marker from the upper node, and transfers the end marker to the user apparatus.

9. A switch control method performed by a user apparatus that includes first radio communication means that performs communication by the first radio communication scheme and second radio communication means that performs communication by a second radio communication scheme, and that communicates with a base station corresponding to the first radio communication scheme, comprising:
transmitting a switch notification to the base station when determining to switch from communication by the first radio communication scheme to communication by the second radio communication scheme.

10. A scheduling control method performed by a base station for performing communication with a user apparatus by a first radio communication scheme, the user apparatus including first radio communication means that performs communication by the first radio communication scheme and second radio communication means that performs communication by a second radio communication scheme, comprising:
a step of receiving a switch notification from the user apparatus when the user apparatus determines to switch from communication by the first radio communication scheme to communication by the second radio communication scheme; and
a step of stopping scheduling for the user apparatus when receiving the switch notification.
